# EUROPEAN PATENT APPLICATION

(11) **EP 4 357 548 A1**
(43) Date of publication of application: **24.04.2024**
(21) Application number: 23204142.6
(22) Date of filing: 17.10.2023
(51) Int. Cl.: E04C 2/20, E04B 1/80, E04C 2/288

(54) **METHOD FOR THE PRODUCTION OF INSULATING PANELS AND FOR THE USE OF SUCH INSULATING PANELS**

(30) Priority: 18.10.2022 NL 2033344
(71) Applicant: IsoBouw Systems B.V., 5711 EG Someren (NL)
(72) Inventor: RENSEN, Petrus Frederikus Maria, SOMEREN (NL); SCHRIEKS, Manita, SOMEREN (NL)
(74) Representative: Algemeen Octrooi- en Merkenbureau B.V.

(57) **Abstract**

Method for the production of insulating panels, comprising the steps:
K obtaining standard insulating panel parts which each have a shape and a size which are identical to one another,
L on the basis of a shape of a structural wall part, which is to be clad with an insulating layer, of a prefabricated facade panel to be produced, determining respective shapes of multiple insulating panels to be produced which together form the insulating layer,
M on the basis of the shapes determined in step L of the insulating panels to be produced, for at least one insulating panel thereof, determining respectively desired shapes of multiple insulating panel parts which are intended to be connected directly together in order jointly to form the insulating panel concerned, wherein at least one of said desired shapes is smaller than and fits within the shape of a standard insulating panel part, and the others of said desired shapes are the same as the shape of a standard insulating panel part,
N obtaining multiple insulating panel parts of which the desired shapes are determined in step M, wherein the at least one insulating panel part, of which the desired shape is smaller than the shape of each of the standard insulating panel parts, is produced by trimming a standard insulating panel part obtained in step K,
O directly connecting together the least one insulating panel part trimmed in step N and any standard insulating panel parts to produce an insulating panel determined in step L.

## Description

There is an increasing demand for prefabricated facade panels. These comprise a structural, plate-like wall part such as with a timber skeleton or of concrete, against which insulating panels are attached or which are clad with insulating panels. It is known to produce insulating panels with a size of 60 cm by 120 cm at a first production location and attach them to such wall parts at a second production location remote from the first production location. Then material is removed from the insulating panels at the site of openings in the wall part in which window frames for example will later be installed. This removed material becomes waste or in the best case is recycled. In the latter case, in practice it is necessary to transport such removed material by road back from the second production location to the first production location.

International patent application WO 2022/130330 A1 is aimed at the production of plate-like insulating panels for use in prefabricated facades. In this production, the insulating panels are tailor-made so there is no waste of insulating material. The disadvantage is that a costly and complex mould is required to be able to produce the various shapes necessary. In addition, the insulating panels cannot have sloping sides as is desirable at the eaves under sloping roofs. Then it is still necessary to remove material from the insulating panels.

The animation shown in the YouTube film https://www.youtube.com/watch?v=hQmhJ4HMxkl shows a so-called In Time Correct Shape (ITCS) system for the production of insulating panels, which production largely corresponds to the production of insulating panels as described in WO 2022/130330 A1.

The YouTube film https://www.voutube.com/watch?v=b61HKi4LUYM by BIM4Production shows that a complete insulating layer for a prefabricated facade is connected to a concrete wall part. Insofar as the method here is understood on the basis of the film, it is clear that the method is labour-intensive.

Dutch patent application NL 1042196 is directed at the renovation of buildings and uses self-supporting facade insulating elements which each comprise a continuous insulating layer of insulating elements placed next to one another, and an overlapping layer which holds the continuous insulating layer together. The insulating elements are tailor-made to allow the shape and size of the facade insulating elements concerned to be adapted to the shape and size of the facade of the building to be renovated, including openings therein such as in particular for window frames. For this, a template is used which is filled with insulating elements and sometimes structural ribs. During application, such a facade insulating element is placed against a complete facade or a specific part of a building to be renovated. The production of the self-supporting facade insulating elements is extremely complex.

The present invention concerns an improvement for the above-mentioned problem and is here primarily aimed at a method for the production of insulating panels. The method comprises the steps
K obtaining standard insulating panel parts which each have a shape and a size which are identical to one another,
L on the basis of a shape of a structural wall part, which is to be clad with an insulating layer, of a prefabricated facade panel to be produced, determining respective shapes of multiple insulating panels to be produced which together will form the insulating layer,
M on the basis of the shapes determined in step L of the insulating panels to be produced, for at least one insulating panel thereof, determining respectively desired shapes of multiple insulating panel parts which are intended to be connected directly together in order jointly to form the insulating panel concerned, wherein at least one of said desired shapes is smaller than and fits within the shape of a standard insulating panel part, and the others of said desired shapes are the same as the shape of a standard insulating panel part,
N obtaining multiple insulating panel parts of which the desired shapes are determined in step M, wherein the at least one insulating panel part of which the desired shape is smaller than the shape of each of the standard insulating panel parts is produced by trimming a standard insulating panel part obtained in step K,
O directly connecting together the least one insulating panel part trimmed in step N and any standard insulating panel parts to produce an insulating panel determined in step L.

In this method, standard insulating panel parts are used. Such insulating panel parts, because they each have a mutually identical size and shape, can be produced relatively easily, e.g. in a relatively simple mould. The insulating panel parts are each intended to form part of an insulating panel which will form part of an insulating layer used for cladding a structural wall part of a prefabricated facade panel to be produced. The insulating layer then also forms part of the prefabricated facade panel. On the basis of the shape of the structural wall part, shapes are determined of multiple insulating panels to be produced, which jointly will or may form the insulating layer. Each insulating panel, or at least the majority of the multiple insulating panels intended to be included in an insulating layer, is then formed by connecting together a number, e.g. two, three, four, five or six standard insulating panel parts. Thus the respective insulating panels are formed which are intended to jointly form the insulating layer. To allow the shape of the insulating layer to be adapted to the shape of the structural wall part, including any openings therein e.g. for window frames, prior to the interconnection of the insulating panel parts to form an insulating panel, at least one of the insulating panel parts of the at least one of the insulating panels is trimmed, whereby the respective at least one trimmed insulating panel part is smaller than a standard insulating panel part and fits within the shape thereof. The above-mentioned adaptation of the shape of the insulating layer to the shape of the structural wall part does not by definition require the corresponding shapes to be identical to one another. For example, an offset e.g. of 20 cm may be provided for example at the location of corners, such as external or internal corners, or at the angled connection of a storey floor to a wall. Also, the shapes may e.g. differ from one another because of window frames in the final building. The construction of an insulating panel from multiple insulating panel parts makes it possible to limit the quantity of waste from trimming the insulating panel parts concerned, compared with the necessary quantity of waste in a situation in which an insulating panel with the same shape and size is produced from one typically rectangular piece as described in WO 2022/130330 A1. Trimming at least one insulating panel part before it is connected to other insulating panel parts to form an insulating panel is easier than in the situation in which trimming takes place only after the corresponding insulating panel has been connected to the other insulating panel parts. In addition, in the case that the latter connection takes place by gluing, the applied glue may cause a problem for recycling. The interconnection of the insulating panel parts, which may thus concern both standard insulating panel parts and trimmed insulating panel parts, into respective insulating panels brings both logistical advantages and production advantages, because the number of insulating panels with which a structural wall part is clad is significantly smaller, for example at least three, four, five or six times smaller, than the total number of insulating panel parts from which the respective insulating panels are constructed.

In an embodiment, the standard insulating panel parts as obtained during step K have a rectangular shape, viewed perpendicularly thereon. Such a rectangular shape matches the rectangular shape of rectangular prefabricated facades or roofs, which is the most common shape of a prefabricated facade or roof, and a rectangular shape of the insulating panel parts in practice means there is relatively little need for trimming insulating panel parts.

The trimming of a standard insulating panel part according to step N comprises, in a practical embodiment, cutting away at least one part of a standard insulating panel part obtained in step K. The cutting away may take place for example by means of a heated filament which is moved through the material, such as expanded polystyrene, of the respective insulating panel part. Alternatively, instead of a heated filament, another tool may be used such as e.g. a heated pin, or a cutting instrument such as a sawing wire or thin cutter. It is possible to use a stationary tool and a robot, such as a six-axis robot, which moves a standard insulating panel part over the tool concerned, whereby part of the standard insulating panel part concerned is cut away.

In order to use the material of the standard insulating panel parts efficiently, it may be very advantageous if the method also comprises the step of supplying as raw material the part cut away in step N, where applicable after trimming thereof, to a device which is used for the production of insulating panel parts as obtained during step K.

In order namely to adapt to the shaping of a gable end in a building with a sloping roof, in one embodiment of the invention, the cutaway part has a triangular shape, viewed perpendicularly onto the respective standard insulating panel part.

In order, in a relatively simple fashion, to position insulating panel parts mutually correctly during their interconnection, it is preferred if the standard insulating panel parts, on at least one peripheral side thereof, preferably on each peripheral side thereof, each comprise a rebate. The rebate may also contribute to the insulating function of the insulating layer.

In the case that a standard insulating panel part comprises a rebate on at least one peripheral side, in one embodiment, the cut-away part of a standard insulating panel part may comprise a rebate, wherein the cutting away according to step N produces a flat peripheral side. Such a flat peripheral side may for example form part of the periphery of an insulating layer or of an opening therein.

In an embodiment advantageous for production, the standard insulating panel parts are each made from one piece, also for example if the insulating panel parts are provided with at least one rebate as described above.

In a further embodiment, for the purpose of the determination according to step L, a control server selects, from a library of basic shapes of insulating panels, standard insulating panels for forming the insulating layer on the basis of the selected standard insulating panels, wherein the control server contains the library and wherein the basic shapes of the insulating panels of the library differ from one another with respect to the mutual positioning of the insulating panel parts contained by the insulating panels concerned, and/or with respect to the number of insulating panel parts contained by the insulating panels concerned. Thus efficient use may be made of available calculation power for carrying out the determination according to step L.

In one embodiment which may have considerable logistical advantages, step K comprises the production of the insulating panel parts. Thus in a single production location, both the insulating panel parts and the insulating panels may be produced and no road transport in between is required.

The invention is very suitably based on an embodiment in which the production of the insulating panel parts comprises the forming of the insulating panel parts in a mould. The mould may be designed relatively simply.

In a practical embodiment which allows efficient transport of the insulating panels by road to a location where the insulating panels are attached against a structural wall part, after step O, the insulating panels are stacked on pallets measuring 120 cm by 120 cm. The stacking is preferably selected such that the insulating panels can also be attached to the structural wall part concerned in the order in which they are taken from the pallet from above.

To increase the flexibility with regard to the assembly of insulating panels with a rectangular shape, it may be preferred that the ratio between the length and the width of a main surface of each standard insulating panel is equal to 3 : 2. A main surface is a surface which is surrounded by the peripheral sides of the insulating panel and which, in a suitable form of the prefabricated facade panel concerned, either faces the structural wall part or faces away therefrom.

For logistical reasons, but also for reasons connected with aiming for a balance between a minimum quantity of waste (which may or may not be recycled) and optimisation of the production process, it may be preferred that each insulating panel part of an insulating panel produced in step O, viewed perpendicularly onto the insulating panel part, fits within a rectangle measuring 65 cm by 95 cm, preferably within a rectangle measuring 45 cm by 65 cm. The smallest rectangle which can be drawn around an insulating panel part concerned, viewed perpendicularly, i.e. including any rebate, is then for example 42.0 cm by 61.5 cm.

Also for logistical reasons, it may furthermore be preferred that each insulating panel produced in step O, viewed perpendicularly onto the insulating panel, fits within a square measuring 155 cm by 155 cm, preferably within a square measuring 125 cm by 125 cm. The smallest square which can be drawn around an insulating panel concerned, i.e. including any rebate, is then for example 150 cm by 150 cm, or 120 cm by 120 cm.

The production process may further benefit if each insulating panel produced in step O comprises maximum twelve, preferably maximum six insulating panel parts. The former number of twelve may namely be advantageous on use of insulating panel parts which, as described above, fit within a rectangle measuring 65 cm by 95 cm, but not within a rectangle measuring 45 cm by 65 cm, while said number of six may namely be advantageous on use of insulating panel parts which fit within a rectangle measuring 45 cm by 65 cm.

In a favourable embodiment, in step O, the direct connecting of the at least one insulating panel part trimmed in step N and any standard insulating panel parts for production of insulating panel part determined in step L, takes place by gluing or by click-fastening.

It may furthermore be advantageous if properties of the respective materials of at least two of the insulating panel parts, which are connected together in step O, differ from one another. The properties concerned may for example be the heat-insulating and/or fire-retardant properties. Thus it is not necessary for an insulating panel to be made as a whole from the same material, in the sense of material with the same properties, whereby necessarily the material of an insulating panel must be matched to the region of the insulating panel in which the highest requirements are imposed on the material of the insulating panel. Thus a more efficient use of available material may be made.

According to a further aspect, the invention concerns a method for the use of insulating panel parts which are produced for example using a method according to the invention as described above. The usage method comprises the steps:
P obtaining a group of insulating panels, preferably produced according to the above-mentioned step O, wherein at least one insulating panel of the group of insulating panels comprises interconnected, such as glued together, insulating panel parts, of which at least one insulating panel part of the interconnected insulating panel parts is smaller than another insulating panel part of the interconnected insulating panel parts and fits within the shape of the other insulating panel part,
Q obtaining a structural wall part of a prefabricated facade panel to be produced,
R cladding the structural wall part with an insulating layer, for which the insulating panels belonging to the group are attached next to one another, and preferably after one another, against the structural wall part, and after the fixing form the insulating layer or in any case the majority thereof.

In such use, the advantages associated with the above-mentioned method for the production of insulating panel parts benefit the production of a prefabricated facade panel, as these advantages namely lie in an efficient use of material and efficient logistics.

In a practical embodiment, the structural wall part is made of concrete or is of the timber skeleton type.

The cladding of a structural wall part of concrete may take place in a reliable fashion and without the need for use of additional adhesives or fastening means, or at least to a lesser extent, if in step O the concrete of the structural wall part is still in the hardening state, wherein the insulating panels are positioned against the concrete in the hardening state and the at least two insulating panels are at least partly fixed by means of the subsequent further hardening of the concrete.

The mutually correct positioning of the insulating panels and the insulating function may be promoted if mutually facing peripheral sides of insulating panels, which adjoin one another after fixing to the structural wall part, are each provided with a rebate, which rebates adjoin one another.

To limit or even avoid finishing work, it may be preferred that peripheral sides of insulating panels which, after fastening thereof to the structural wall part, lie on the outside of the insulating layer, are flat.

For similar reasons, it may also be preferred that the structural wall part has a opening for a window frame, wherein the shaping of insulating panels, which adjoin the opening after fixing of the insulating panels concerned against the facade panel, is adapted to the shape of the opening before the fixing, so that the insulating panels concerned leave the opening clear. The opening in the corresponding insulating panels may then be the result of the shaping of the insulating panel parts which (jointly) form the insulating panels and which are trimmed according to step N.

In another embodiment, the opening-adjoining peripheral sides of opening-adjoining insulating panels are flat.

In an embodiment usable in many situations, the method also comprises the step of application of a finishing layer, such as a finishing layer which contains stone strips or wood-based panels or is made of concrete, wherein the finishing layer will form part of the prefabricated facade panel. It is thus not necessary to provide such a finishing layer at the construction site.

According to another aspect of the invention, a method for the production of insulating panels as described above for the purpose of a prefabricated facade panel may also be used with similar advantages for insulation of a flat roof. The invention here also provides a method for the production of insulating panels, comprising the steps:
A obtaining standard insulating panel parts which each have a shape and a size which are identical to one another,
B on the basis of a shape of a roof layer to be clad with an insulating layer, determining respective shapes of multiple insulating panels to be produced which together will form the insulating layer,
C on the basis of the shapes determined in step B of the insulating panels to be produced, for at least one insulating panel thereof, determining respectively desired shapes of multiple insulating panel parts which are intended to be connected directly together in order jointly to form the insulating panel concerned, wherein at least one of said desired shapes is smaller than and fits within the shape of a standard insulating panel part, and the others of said desired shapes are the same as the shape of a standard insulating panel part,
D obtaining multiple insulating panel parts of which the desired shapes are determined in step C, wherein the at least one insulating panel part, of which the desired shape is smaller than the shape of each of the standard insulating panel parts, is produced by trimming a standard insulating panel part obtained in step A,
E directly connecting together the least one insulating panel part trimmed in step D and any standard insulating panel parts to produce an insulating panel determined in step B.

The insulating panels thus produced may be placed on the roof layer mentioned in step B in order, together with other insulating panels, to form the insulating layer desired for the roof layer concerned. It is here conceivable that not all insulating panels belonging to the insulating layer are composed of interconnected insulating panel parts. Some of the respective number of insulating panels may then be made of one piece and be larger than the standard insulating panel parts used.

Within the above-mentioned context of use of the invention for insulating a flat roof, the invention also provides a method for the use of insulating panels, preferably as produced according to step E as described above, comprising:
F obtaining a group of insulating panels, wherein at least one insulating panel of the group of insulating panels comprises interconnected insulating panel parts, of which at least one insulating panel part of the interconnected insulating panel parts is smaller than another insulating panel part of the interconnected insulating panel parts and fits within the shape of the other insulating panel part,
G cladding a roof layer mentioned in step B with an insulating layer, for which the insulating panels belonging to the group are placed next to one another, and preferably after one another, on the roof layer and attached thereto, and after the fixing form the insulating layer or in any case a part thereof.

The invention will be explained in more detail below with reference to the appended figures, which should not be interpreted as restrictive of the invention.
Figure 1 shows in isometric view a prefabricated facade panel in which insulating panels are used which are produced according to the method of the invention;
Figure 2 shows in perspective view a variant of the prefabricated facade panel from figure 1;
Figure 3 shows a part of the horizontal cross-section along line III - III from figure 2;
Figure 4 shows in isometric view a further variant of a prefabricated facade panel;
Figure 5 shows in perspective view an insulating panel part as used in the prefabricated facade panels from the preceding figures;
Figures 6A and 6B show in isometric view an insulating panel consisting of two insulating panel parts from figure 5, wherein figure 7B shows a transparent view;
Figures 7A and 7B show in isometric view an insulating panel as used in the prefabricated facade panels from figures 1 and 2, wherein figure 6b shows a transparent view;
Figures 8A to 8E show in cross-section five variants of possible connections of two insulating panel parts laid next to one another;
Figure 9 shows in plan view fourteen insulating panels which may be included in the library of standard insulating panels; and
Figure 10 shows in isometric view twelve trimmed insulating panel parts.

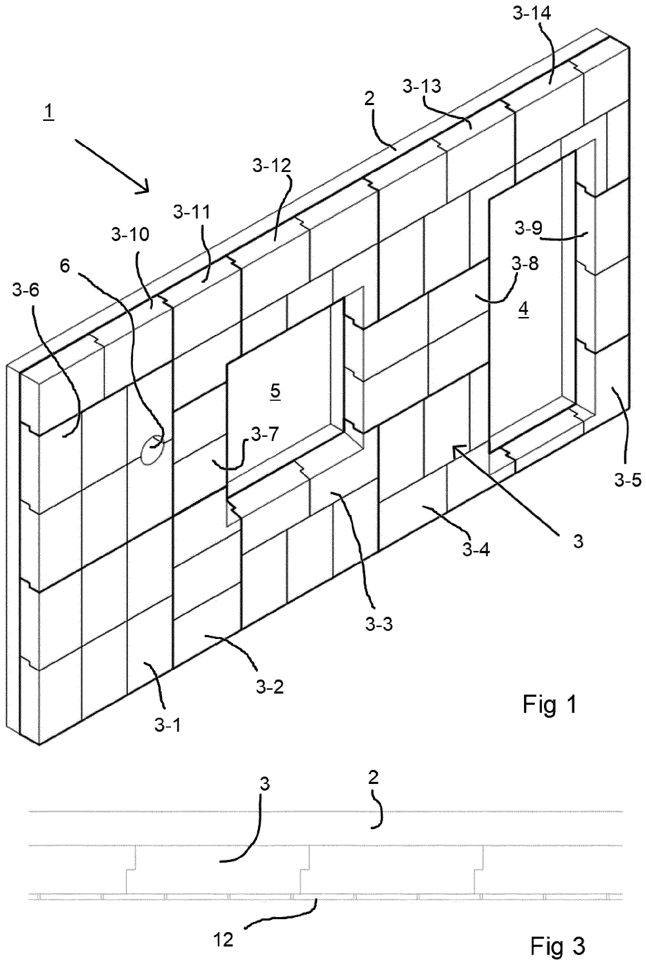

Figure 1 shows a prefabricated facade panel 1. The facade panel 1 comprises a plate-like wall part configured as a structural wall part 2 and made of concrete, and an insulating layer 3 which is attached to the outside of the wall part 2. The facade panel 1 is configured with three openings 4, 5, 6 respectively for a door frame, a window frame and a circular passage for a pipe. The openings 4, 5 and 6 extend both in the wall part 2 and in the insulating layer 3.

The insulating layer 3 has a thickness of 140 mm but may generally for example have a thickness between 50 and 300 mm, and is made from fourteen insulating panels 3-1 to 3-14 which in this example, without exception, differ from one another with respect to the shape thereof, so that jointly they can form the insulating layer 3 including the openings 4, 5 therein. The insulating panels 3-1 to 3-14 have the common feature that they comprise at least two and most six insulating panel parts connected together by gluing, wherein said insulating panel parts may be trimmed or not, as will be explained in more detail below. It is also conceivable within the context of the present invention that some of the number of insulating panels used for a prefabricated facade panel have the same shape, and/or that an insulating panel is formed only by a single insulating panel part which may or may not be trimmed.

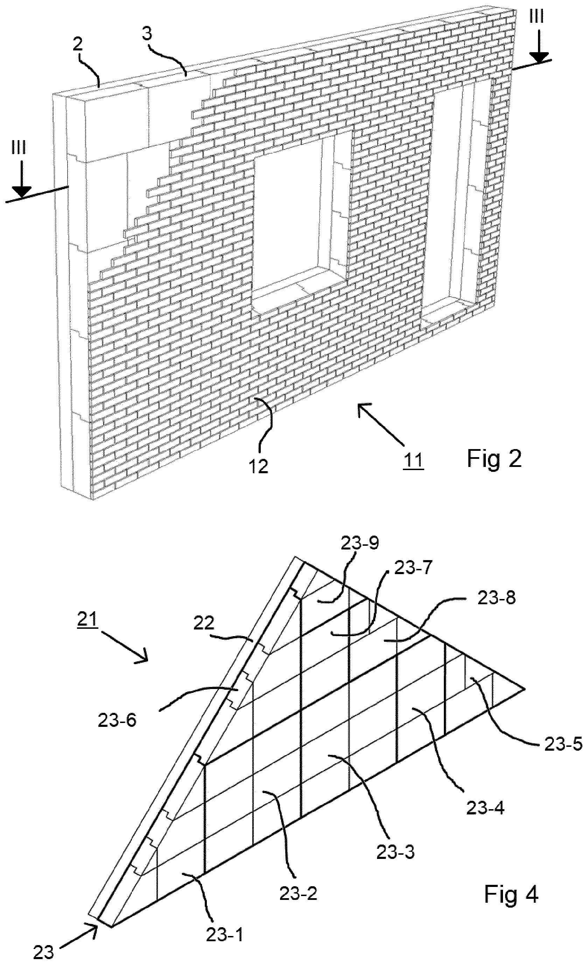

Figures 2 and 3 concern a prefabricated facade panel 11 which corresponds to the prefabricated facade panel 1 with respect to the structural wall part 2 and the insulating layer 3 thereof, but which is furthermore produced with a finishing layer 12 of stone strips glued against the outside of the insulating layer 3. The finishing layer 12 gives the prefabricated facade panel 11 from the outside the appearance of a traditional masonry facade. Also alternative finishing layers may be used, such as those of concrete or based on wood, such as OSB (oriented strand board) panels which may or may not be connected to the insulating layer via an intermediate layer.

The prefabricated facade panel 21 in figure 4 has a triangular shape and is intended to form part of a gable end of a building with a gable roof. The prefabricated facade panel 21 comprises a structural wall part 22 of concrete and an insulating layer 23 which is attached to the outside of the wall part 22 and is constructed from nine insulating panels 23-1 to 23-9. Each of the insulating panels 23-1 to 23-9 is in turn constructed from insulating panel parts which may or may not be trimmed.

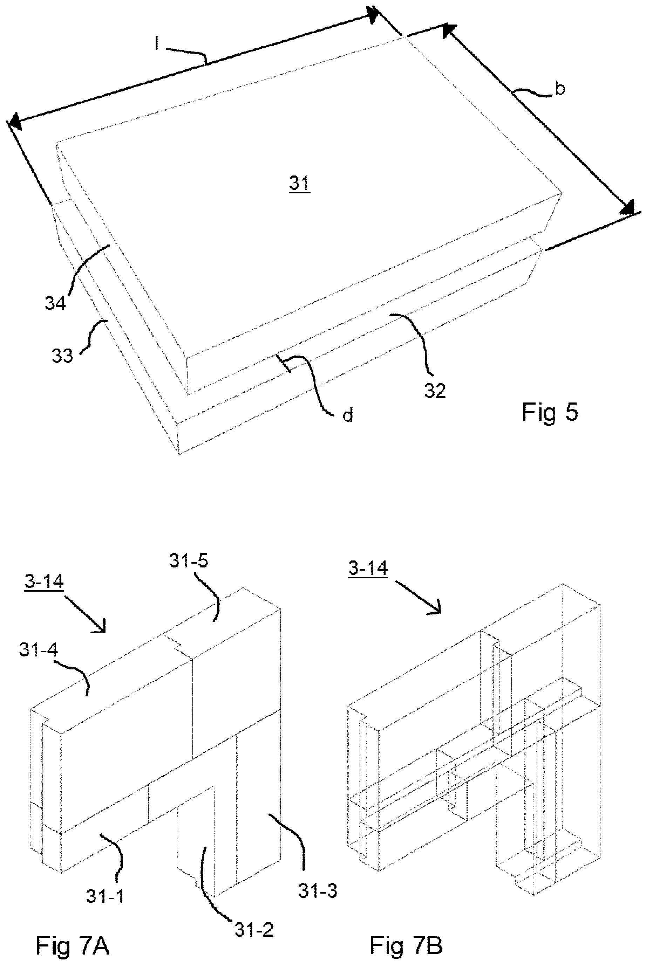

Figure 5 shows an insulating panel part 31 which has not (yet) been trimmed, as used for both insulating panels 13-1 to 13-4 for facade panel 1 and facade panel 11, and for insulating panels 23-1 to 23-9 for facade panel 21. The insulating panel part 31 has a rectangular shape with a length I and a width b. In the present exemplary embodiment, I and b are respectively equal to 60 cm and 40 cm. The insulating panel part 31 is provided around its entire periphery with a rebate 32 with a depth d. Depth d may for example be between 1 cm and 5 cm, such as 3 cm. Because of the peripheral rebate 32, the insulating panel part 31 may be regarded virtually as being constructed from two layers 33, 34 of identical shape and size laid on one another, connected together and shifted relative to one another in two directions over a distance d. Each insulating panel 31 is preferably made of expanded polystyrene (EPS) and formed in a mould by foaming EPS grains, wherein the EPS grains in the mould are partly, e.g. to maximum 50 w.%, preferably maximum 25 w.%, filled with previously foamed EPS material, which for example is crushed by grinding the material. The mould may be relatively simple since no or only limited variation is required with respect to the shaping of the insulating panel parts to be produced with the mould. Any variation of the insulating panel parts to be formed in the mould may for example lie in the thickness thereof, for achieving different insulation values.

Alternatively, it is also possible that each of the insulating panel parts is composed of two rectangular plates, preferably but not necessarily of equal thickness, e.g. of 70 mm, and for example with a width and length of 585 mm and 390 mm, which are then shifted relative to one another e.g. over a distance of 30 mm, and connected e.g. by gluing, so as to form a rebate such as the rebate 32 of e.g. 30 mm. Thus also other materials than EPS may be used, such as extruded plastic material such as extruded polystyrene (XPS), or EPS materials which differ from one another in their properties such as heat-insulating, moisture-repellent or fire-retardant properties, or properties concerning compressive strength. It is also possible that the two plates are made of different materials.

It is also possible that insulating panel parts from which an insulating panel is composed differ from one another with respect to their material. Thus it is possible that a particular property, e.g. the fire-retardant properties, of an insulating panel are not the same over the entire surface of an insulating panel. In concrete terms, for example it may be chosen to have only the nine topmost insulating panel parts, belonging to insulating panels 3-10, 3-11, 3-12, 3-13 and 3-14 in figure 1, with better fire-retardant properties than the other insulating panel parts shown in figure 1.

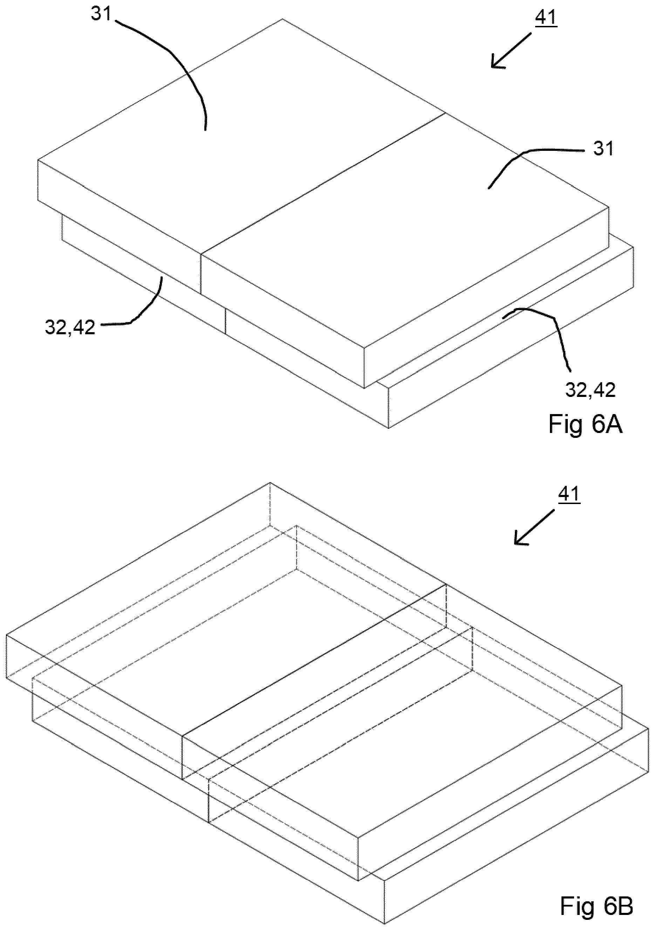

Figures 6A and 6B show an insulating panel 41 consisting of two insulating panel parts 31 which are positioned next to one another on their long sides and there connected together by gluing. Because of the peripheral rebate 32 of each of the insulating panel parts 31, the insulating panel 41 also has a peripheral rebate 42 with a depth d. The rebates 32 of each of the insulating panel parts 31 ensure a good and simple interconnection of the two insulating panel parts 31. In addition, the adjoining rebates 32 contribute to the insulating function of the insulating panel 41.

Figures 7A and 7B show the insulating panel 3-14 of the prefabricated facade panel 1 as shown in figure 1. The insulation on part 3-14 is constructed from five, in this example without exception trimmed, insulating panel parts 31-1 to 31-5. Each of the insulating panel parts 31-1 to 31-5 is formed by trimming an insulating panel part 31 according to figure 5. This trimming takes place by gripping the insulating panel part 31 concerned, e.g. directly after production thereof in a mould, by means of a robot and manipulating this along or actually over a heated filament, wherein a part of the insulating panel part 31 is cut away by the heated filament so that the respectively trimmed insulating panel parts 31-1 to 31-5 are formed. The shaping of a cut surface obtained by means of the robot and heated filament is actually limited only by the robot. In a six-axis robot, an insulating panel part may be manipulated with six degrees of freedom, whereby a cut surface need not only be a straight surface or be constructed from straight surfaces, but also may have a freely curving form. Such a curved form is applied for two of the insulating panel parts which surround the round opening 6 in the insulating layer 3 according to figure 1. The material cut away when trimming the insulating panel part 31 is preferably returned back to the mould, preferably after it has been ground or otherwise crushed, for the purpose of production of a following insulating panel part 31, so that the material is recycled and there is no residual waste.

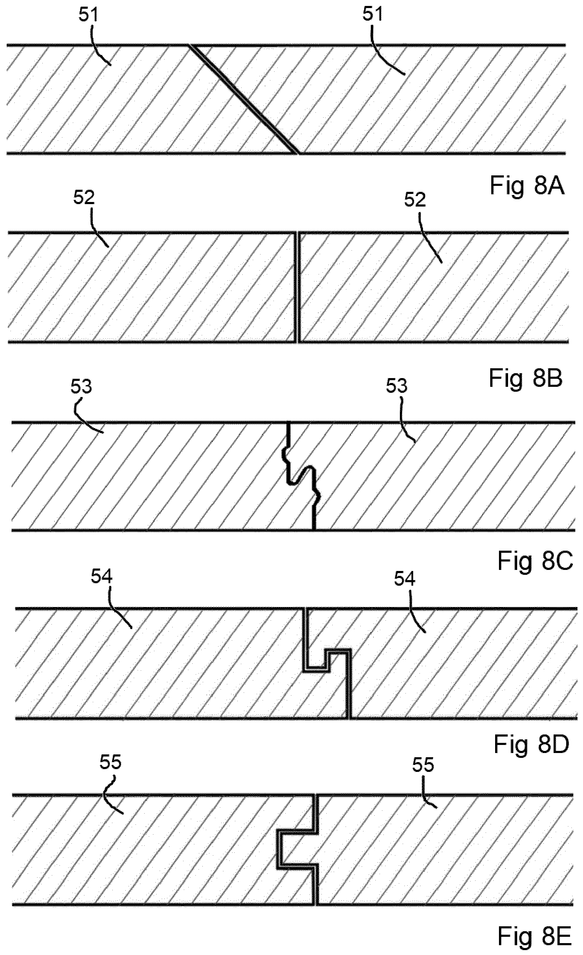

Figures 8A to 8E shows five different embodiments of the peripheral sides of insulating panel parts as may be used in the present invention. Figure 8A shows mutually adjoining, chamfered peripheral sides of insulating panels 51. In figure 8B, the mutually adjoining peripheral sides of insulating panel parts 52 are straight. In figure 8C, there is a click-fastening between insulating panel parts 53. Figure 8D shows peripheral sides of insulating panel parts 54 which hook into one another, and figure 8E shows a tongue and groove connection between the insulating panel parts 55.

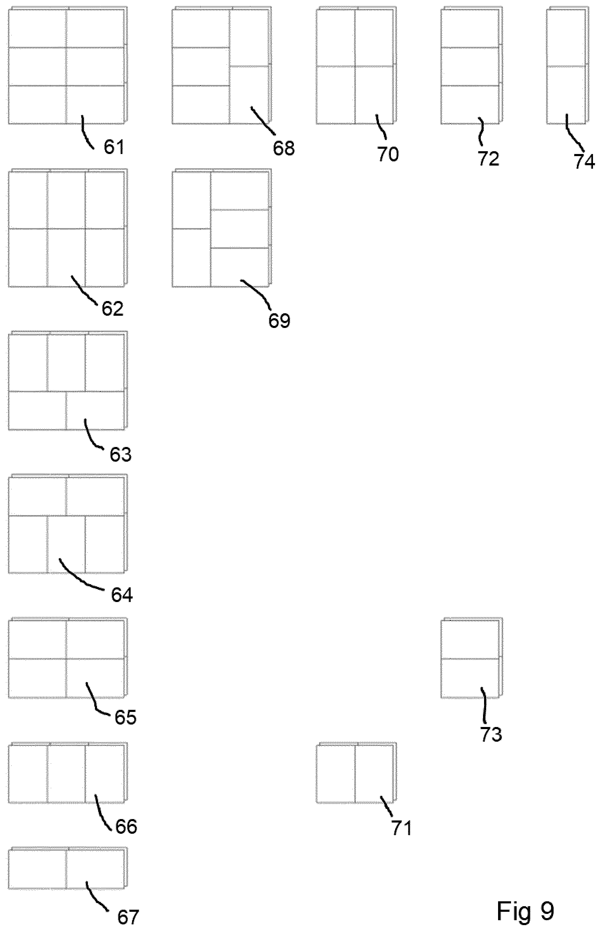

Figure 9 shows a group of fourteen insulating panels 61 to 74 which are each rectangular and constructed from at least two and most six insulating panel parts 31. These insulating panels, and in some cases also an insulating panel which consists only of a single insulating panel part, may form a library of standard insulating panels which may serve as a basis for determining insulating panels which may be used to form an insulating layer for a specific prefabricated facade panel, such as for example the prefabricated facade panel 1 in figure 1 or the prefabricated facade panel 21 in figure 4. In fact, non-rectangular insulating panels may also be used, which are formed by an insulating panel part not being contained within an insulating panel according to figure 9. This is namely the case if it is to be provided that such an insulating panel part must in a second instance be completely separated from the respective insulating panel in order to give this the desired form. The shaping of the prefabricated facade panel 1 is decisive here. Furthermore, certain basic rules may be applied such as the rule that every insulating panel must have a minimum size, and/or that the peripheral side of an insulating panel must lie at least at a specific distance, e.g. at least 10 cm, from a corner of an opening 4 and 5 in figure 1. Another rule may be that the stepped form of rebates must run from inside to outside, or must not in any case run upwards. This prevents water flowing, via the seam between insulating panels provided above one another, into the insulating layer of a prefabricated facade panel from outside to inside, in the direction of the structural wall part of the prefabricated facade panel. In this context, see also figure 1.

Although the shaping and size, at least on the periphery, of insulating panels 61 and 62, insulating panels 63 and 64, and insulating panels 68 and 69 are identical, the difference between these insulating panels lies in the mutual positioning of the insulation panel parts thereof, which is important for example for complying with the above-mentioned rule concerning the minimum distance from a corner of an opening. The external dimensions of the two largest insulating panels 61 and 62 are equal to 120 cm by 120 cm.

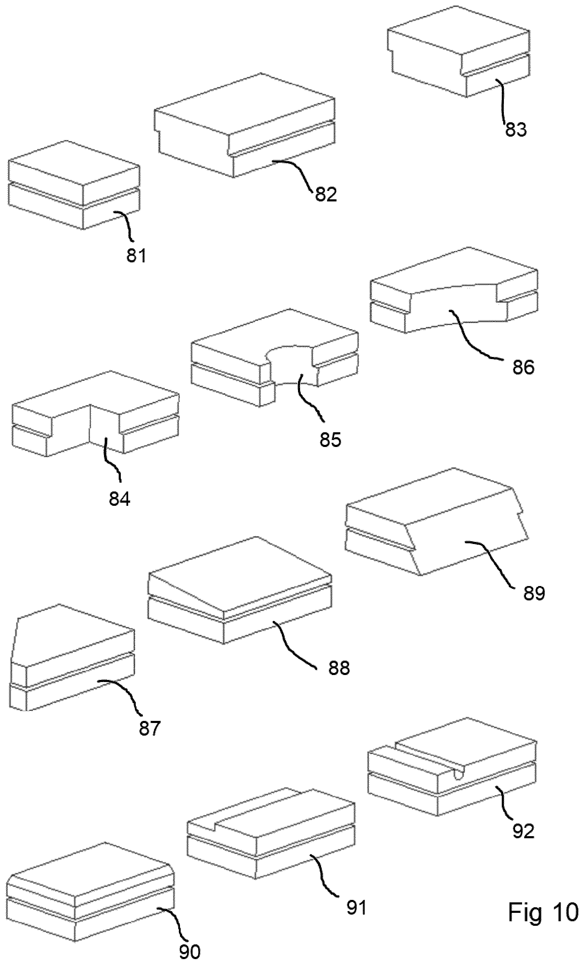

Figure 10 shows twelve examples of trimmed insulating panel parts as may be formed by trimming the insulating panel part 31 according to figure 5. The insulating panel part is trimmed before the connection of such a trimmed insulating panel part with other insulating panel parts, which may or may not be trimmed, to form an insulating panel. The trimmed insulating panel 81 still has a peripheral rebate. Such a trimmed insulating panel part may be used for example in insulating panels 23-5 and 23-8 in figure 4. In the trimmed insulating panel parts 82 and 83, part of the insulating panel part 31 which contains the rebate has been cut away, whereby a flat peripheral side is produced. Such trimmed insulating panel parts may typically be used on the outer periphery of the insulating layer or on the periphery of openings therein. An insulating panel part such as the trimmed insulating panel part 84 is used in the internal corner of insulating panel 3-14 in figures 1, 7A and 7B. Trimmed insulating panel parts such as trimmed insulating panel part 85 are used on the either side of opening 6 in the insulating panel 3-6 in figure 1. The trimmed insulating panel part 86 is formed organically with a curved side. An example of a trimmed insulating panel part similar to the trimmed insulating panel part 87 can again be found in insulating panel 23-1 of figure 4. The trimmed insulating panel part 88 or a similar trimmed insulating panel part may be used as a roof panel, to create a fall for discharging rainwater or on a decorative facade with chamfered surfaces. Trimmed insulating panel parts such as trimmed insulating panel 89 may be used on the periphery of an opening, such as on the underside of the opening 5 in figure 1. The trimmed insulating panel part 90 may be used for aesthetic reasons or to prevent damage caused by the faceted edge thereof. Trimmed insulating panel part 91 may be used for window frame anchors and in the case of damage around a gable. Trimmed insulating panel part 92 may typically be used to provide invisible space inside a prefabricated facade panel for pipes extending parallel to the prefabricated facade panel.

As soon as e.g. a control server, which for this uses the above-named library, has determined the shape of the individual insulating panels, the shape has also been determined of the insulating panel parts which together form each of the insulating panels. These are either insulating panel parts taken from the mould, e.g. such as insulating panel part 31 in figure 5, or insulating panel parts which may be obtained by trimming an insulating panel part taken from the mould, e.g. by means of a robot and heated filament as described above. Then the control server actuates a robot which grips an insulating panel part formed in the mould and pushes through a heated filament to give the resulting insulating panel part a desired trimmed form. As soon as all insulating panel parts required for a specific insulating panel have been produced in this way, they can be mutually positioned, e.g. on a table, in the correct fashion by means of a manipulator such as a pick-and-place robot, wherein before this mutual positioning, the peripheral sides of the insulating panels, intended to be placed next to one another in the final insulating panel part, are provided with a glue layer which can be applied by the robot or by a stationary gluing head, along which the insulating panel parts are moved by means of said pick-and-place robot.

As soon as all insulating panels intended for prefabricated facade panel are ready, they are loaded onto a pallet, wherein the insulating panels are stacked in the order in which the insulating panels must be connected to the structural wall part of the prefabricated facade panel concerned. In the case of facade panel 1 in figure 1, the order is the same as the numbering of the insulating panels 3-1 to 3-14. Thus insulating panel 3-1 is the first to be connected to the wall part 2, and insulating panel 3-14 is the last. The dimensions of the pallet are preferably equal to those of the largest insulating panels, such as insulating panels 61, 62 in figure 9.

Then the insulating panels laid on the pallet are transported by road to the production location of the prefabricated facade panel concerned. At the production location, the connection between the wall part 2 on one side and the insulating panels 3-1 to 3-14 on the other side may be created, for example by adapting the production of wall part 2 to the connection of the insulating panels 3-1 to 3-14 against the wall part 2, wherein the insulating panels 3-1 to 3-14 are positioned one after the other against the still hardening concrete of the wall part 2, preferably while the wall part 2 is horizontal. On further hardening, the connection will be created because the hardening concrete will adhere to the insulating panels 3-1 to 3-14.

Although the invention has been explained above with reference to examples which relate to a facade of a building, the invention may also be used to create an insulating layer to be applied to a roof layer of a flat roof. In such flat roofs, for example openings may be provided for light inlet. At least some of the insulating panels, which together form such an insulating layer, are here composed of insulating panel parts of which at least one is a trimmed insulating panel part. The method of trimming is adapted to the shaping of the roof layer

## Claims

1. Method for the production of insulating panels (3-1 - 3-14; 23-1 - 23-9; 41; 61 - 74), comprising the steps:
K obtaining standard insulating panel parts (31) which each have a shape and a size which are identical to one another,
L on the basis of a shape of a structural wall part, which is to be clad with an insulating layer, of a prefabricated facade panel (1) to be produced, determining respective shapes of multiple insulating panels to be produced which together will form the insulating layer (3; 23),
M on the basis of the shapes determined in step L of the insulating panels (3-1 - 3-14; 23-1 - 23-9; 41; 61 - 74) to be produced, for at least one insulating panel thereof, determining respectively desired shapes of multiple insulating panel parts which are intended to be connected directly together in order jointly to form the insulating panel concerned, wherein at least one of said desired shapes is smaller than and fits within the shape of a standard insulating panel part, and the others of said desired shapes are the same as the shape of a standard insulating panel part,
N obtaining multiple insulating panel parts of which the desired shapes are determined in step M, wherein the at least one insulating panel part, of which the desired shape is smaller than the shape of each of the standard insulating panel parts, is produced by trimming a standard insulating panel part obtained in step K,
O directly connecting together the least one insulating panel part (31-1 - 31-5; 81 - 92) trimmed in step N and any standard insulating panel parts (31) to produce an insulating panel (3-1 - 3-14; 23-1 - 23-9; 61 - 74) determined in step L.

2. Method according to Claim 1, wherein the trimming of a standard insulating panel part according to step N comprises cutting away at least one part of a standard insulating panel part obtained in step K.

3. Method according to Claim 2, comprising the step of supplying as raw material the part cut away in step N, where applicable after trimming thereof, to a device which is used for the production of insulating panel parts as obtained during step K.

4. Method according to any of the preceding claims, wherein the standard insulating panel parts, on at least one peripheral side thereof, preferably on each peripheral side thereof, comprise a rebate.

5. Method according Claim 2 or a claim dependent thereon and according to Claim 4 or a claim dependent thereon, wherein the cut-away part of a standard insulating panel part comprises a rebate, wherein the cutting away according to step N produces a flat peripheral side.

6. Method according to any of the preceding claims, comprising the selection, for the purpose of the determination according to step L, by a control server from a library of basic shapes of insulating panels, of standard insulating panels for forming the insulating layer on the basis of the selected standard insulating panels, wherein the control server contains the library and wherein the basic shapes of the insulating panels of the library differ from one another with respect to the mutual positioning of the insulating panel parts contained by the insulating panels concerned, and/or with respect to the number of insulating panel parts contained by the insulating panels concerned.

7. Method according to any of the preceding claims, wherein step K comprises the production of the insulating panel parts, the production of the insulating panel parts preferably comprising the forming of the insulating panel parts in a mould.

8. Method according to any of the preceding claims, wherein in step O the direct connecting of the at least one insulating panel part trimmed in step N and any standard insulating panel parts, for production of insulating panel part determined in step L, takes place by gluing or by click-fastening.

9. Method according to any of the preceding claims, wherein properties of the respective materials of at least two of the insulating panel parts which are connected together in step O differ from one another.

10. Method for the use of insulating panel parts comprising the steps:
P obtaining a group of insulating panels (3-1 - 3-14; 23-1 - 23-9), wherein
at least one insulating panel (3-1 - 3-14; 23-1 - 23-9) of the group of insulating panels comprises interconnected insulating panel parts (31, 31-1 - 31-5), of which at least one insulating panel part of the interconnected insulating panel parts is smaller than another insulating panel part of the interconnected insulating panel parts and fits within the shape of the other insulating panel part,
Q obtaining a structural wall part of a prefabricated facade panel to be produced,
R cladding the structural wall part with an insulating layer, for which the insulating panels belonging to the group are attached next to one another against the structural wall part and after the fixing form the insulating layer or in any case the majority thereof.

11. Method according to Claim 10, wherein the structural wall part is made of concrete or is of the timber skeleton type.

12. Method according to Claim 10 or 11, wherein the structural wall part has a opening for a window frame, wherein the shaping of insulating panels, which adjoin the opening after fixing of the insulating panels concerned against the facade panel, is adapted to the shape of the opening before fixing so that the insulating panels concerned leave the opening clear, wherein preferably the open-adjoining peripheral sides of opening-adjoining insulating panels are flat.

13. Method according to Claim 10, 11 or 12, comprising application of a finishing layer, wherein the finishing layer will form part of the prefabricated facade panel, wherein preferably the finishing layer comprises stone strips or wood-based panels or is a stucco layer or made of concrete.

14. Method for the production of insulating panels, comprising the steps:
A obtaining standard insulating panel parts which each have a shape and a size which are identical to one another,
B on the basis of a shape of a roof layer to be clad with an insulating layer, determining respective shapes of multiple insulating panels to be produced which together will form the insulating layer,
C on the basis of the shapes determined in step B of the insulating panels to be produced, for at least one insulating panel thereof, determining respectively desired shapes of multiple insulating panel parts which are intended to be connected directly together in order jointly to form the insulating panel concerned, wherein at least one of said desired shapes is smaller than and fits within the shape of a standard insulating panel part, and the others of said desired shapes are the same as the shape of a standard insulating panel part,
D obtaining multiple insulating panel parts of which the desired shapes are determined in step C, wherein the at least one insulating panel part, of which the desired shape is smaller than the shape of each of the standard insulating panel parts, is produced by trimming a standard insulating panel part obtained in step A,
E directly connecting together the least one insulating panel part trimmed in step D and any standard insulating panel parts to produce an insulating panel determined in step B.

15. Method for the use of insulating panels comprising:
F obtaining a group of insulating panels, wherein at least one insulating panel of the group of insulating panels comprises interconnected insulating panel parts, of which at least one insulating panel part of the interconnected insulating panel parts is smaller than another insulating panel part of the interconnected insulating panel parts and fits within the shape of the other insulating panel part,
G cladding a roof layer with an insulating layer, for which the insulating panels belonging to the group are placed next to one another on the roof layer and attached thereto, and after the fixing form the insulating layer or in any case a part thereof.
